# EUROPÄISCHE PATENTANMELDUNG

(11) **EP 4 497 563 A1**
(43) Veröffentlichungstag der Anmeldung: **29.01.2025**
(21) Anmeldenummer: 24182735.1
(22) Anmeldetag: 18.06.2024
(51) Int. Cl.: B29C 43/24, B29C 43/30, B29C 48/08, B29C 48/17, B29C 48/88, B42D 25/40, G06K 19/077, G06K 19/02, B42D 25/23, B42D 25/455, B42D 25/46, B29C 48/00, B29C 43/52, B29C 43/58, B29K 105/00, B29L 17/00

(54) **VERFAHREN ZUM HERSTELLEN EINER FOLIE MIT EINEM SICHERHEITSMERKMAL FÜR EINEN KARTENFÖRMIGEN DATENTRÄGER, FOLIE UND KARTENFÖRMIGER DATENTRÄGER**

(30) Priorität: 28.07.2023 DE 102023120169
(71) Anmelder: Giesecke+Devrient ePayments GmbH, 81677 München (DE)
(72) Erfinder: Riedl, Josef, 81677 München (DE); Tarantino, Peter, 81677 München (DE)
(74) Vertreter: Giesecke+Devrient IP

(57) **Zusammenfassung**

Die Erfindung betrifft ein Verfahren zum Herstellen einer Folie (30) mit einem Sicherheitsmerkmal für einen kartenförmigen Datenträger, welches die folgenden Schritte aufweist:
- Bereitstellen von wenigstens einem Folienmaterial mit einer Grundfarbe;
- Bereitstellen von wenigstens einem Farbstoff;
- Einbringen des Folienmaterials in einen Extruder (11) einer Extrusionsvorrichtung (10);
- Erhitzen des Folienmaterials zur Ausbildung einer Schmelze (20);
- separates Erhitzen des Farbstoffes zur Ausbildung einer fließfähigen Farbe (21);
- Extrudieren der Schmelze (20) durch einen Düsenaustrittsspalt (12) der Extrusionsvorrichtung (10);
- Zuführen der fließfähigen Farbe (21) zu der extrudierten Schmelze (20) zur Ausbildung eines wulstartigen Gemisches (22);
- Vermischen der fließfähigen Farbe (21) und der extrudierten Schmelze (20) innerhalb des wulstartigen Gemisches (22) zur Ausbildung einer Folie (30), wobei die extrudierte Schmelze (20) und die fließfähige Farbe (21) unterschiedliche Materialeigenschaften aufweisen, sodass sie sich nicht homogen vermischen, wodurch in Draufsicht auf die Folie (30) eine randomisierte Mehrfarbigkeit (50) erkennbar ist.

Ferner betrifft die Erfindung eine Folie (30) sowie einen kartenförmigen Datenträger (32).

## Beschreibung

Die Erfindung betrifft ein Verfahren zum Herstellen einer Folie mit einem Sicherheitsmerkmal für einen kartenförmigen Datenträger, eine Folie mit einem Sicherheitsmerkmal für einen kartenförmigen Datenträger und einen kartenförmigen Datenträger mit einer Folie.

Aus dem Stand der Technik sind eine Vielzahl von kartenförmigen Datenträgern, beispielsweise Smart Cards, Chipkarten, insbesondere mit RFID-Technologie (Radio Frequency Identification), Integrated-Circuit-Cards, Dual-Interface-Karten, Gesundheitskarten, Transitkarten oder Identifikationskarten, bekannt. Insbesondere die Verwendung von Smart Cards, wie beispielsweise Kreditkarten oder Bezahlkarten, hat sich zur Ausführung von finanziellen Transaktionen etabliert. Kartenförmige Datenträger wie Wertdokumente, beispielsweise Pass- und Ausweisdokumente, Ausweiskarten und dergleichen werden in steigendem Maß in öffentlichen Bereichen, aber auch im innerbetrieblichen Bereich eingesetzt.

Der kartenförmige Datenträger weist typischerweise einen Kartenkörper mit einer Modulöffnung zur Aufnahme eines Chipmoduls oder weitere elektronische Komponenten für eine kontaktbasierte und/oder kontaktlose Datenkommunikation auf. Häufig ist vorgesehen, dass der Kartenkörper aus mehreren Folien gebildet ist, wobei die einzelnen Folien mittels einer Lamination aufgrund von Druck und Wärme zu einem Folienschichtenverbund verbunden werden. An der Oberfläche des Kartenkörpers sind bevorzugt Designfolien oder transparente Deckfolien, sogenannte Overlay-Folien, mit Sicherheitsmerkmalen vorgesehen. Optische Sicherheitsmerkmale auf den kartenförmigen Datenträgern sind bekannt und sollen generell die Fälschungssicherheit erhöhen.

Weiterhin ist es bekannt, dass insbesondere homogene einfarbige Folien für die Lamination zum Folienschichtverbund verwendet werden. Zwar kann durch die Verwendung von mehreren Folien mit unterschiedlicher Farbe eine gewisse Mehrfarbigkeit des kartenförmigen Datenträgers im Volumen erzielt werden. Diese ist jedoch typischerweise homogen und weist ein festgelegtes Muster auf. Um jedoch die Fälschungssicherheit des kartenförmigen Datenträgers zu erhöhen ist es wünschenswert eine randomisierte Mehrfarbigkeit für den kartenförmigen Datenträger bereitzustellen.

Aufgabe der vorliegenden Erfindung ist es daher, die Herstellung von Folien mit Sicherheitsmerkmalen für kartenförmige Datenträger mit verbesserter Mehrfarbigkeit bereitzustellen.

Diese Aufgabe wird durch ein Verfahren zum Herstellen einer Folie mit einem Sicherheitsmerkmal für einen kartenförmigen Datenträger, eine Folie mit einem Sicherheitsmerkmal und durch einen kartenförmigen Datenträger gemäß den unabhängigen Patentansprüchen gelöst. Ausgestaltungen und Weiterbildungen der Erfindung sind in den abhängigen Ansprüchen angegeben. Dabei gelten Merkmale und Details, die im Zusammenhang mit dem erfindungsgemäßen Verfahren zum Herstellen einer Folie mit einem Sicherheitsmerkmal für einen kartenförmigen Datenträger beschrieben sind, auch im Zusammenhang mit der erfindungsgemäßen Folie mit einem Sicherheitsmerkmal und dem kartenförmigen Datenträger und jeweils umgekehrt, sodass bezüglich der Offenbarung zu den einzelnen Erfindungsaspekten stets wechselseitig Bezug genommen werden kann.

Im Rahmen der Anmeldung kann die Erfindung bevorzugt für Smart Cards, insbesondere für Kreditkarten und Bezahlkarten, Ausweisdokumente bzw. Identifikationskarten, Gesundheitskarten oder Transitkarten verwendet werden. Es kann aber auch eine Verwendung für andere RFID-Vorrichtungen, wie beispielsweise Schlüsselkarten, Zugangskarten, Token, Wearables oder Sicherheitsausweise, vorgesehen sein.

Gemäß einem Aspekt der Erfindung wird ein Verfahren zum Herstellen einer Folie mit einem Sicherheitsmerkmal für einen kartenförmigen Datenträger bereitgestellt, welches die folgenden Schritte aufweist:
- Bereitstellen von wenigstens einem Folienmaterial mit einer Grundfarbe;
- Bereitstellen von wenigstens einem Farbstoff;
- Einbringen des Folienmaterials in einen Extruder einer Extrusionsvorrichtung;
- Erhitzen des Folienmaterials zur Ausbildung einer Schmelze;
- separates Erhitzen des Farbstoffes zur Ausbildung einer fließfähigen Farbe;
- Extrudieren der Schmelze durch einen Düsenaustrittsspalt der Extrusionsvorrichtung;
- Zuführen der fließfähigen Farbe zu der extrudierten Schmelze zur Ausbildung eines wulstartigen Gemisches;
- Vermischen der fließfähigen Farbe und der extrudierten Schmelze innerhalb des wulstartigen Gemisches zur Ausbildung einer Folie, wobei die extrudierte Schmelze und die fließfähige Farbe unterschiedliche Materialeigenschaften aufweisen, sodass sie sich nicht homogen vermischen, wodurch in Draufsicht auf die Folie eine randomisierte Mehrfarbigkeit erkennbar ist.

Im Rahmen der Anmeldung kann beispielsweise das Folienmaterial als Granulat für den Extruder bereitgestellt werden, insbesondere als Kunststoffgranulat bzw. Polymergranulat. Das Folienmaterial weist eine Grundfarbe auf, welche bevorzugt einfarbig und homogen ist. Der Farbstoff kann insbesondere pulverförmig bereitgestellt werden. Bevorzugt können auch mehrere Farbstoffe vorgesehen werden.

Das Folienmaterial wird in den Extruder eingebracht bzw. eingefüllt und zur Ausbildung einer Schmelze erhitzt bzw. aufgeschmolzen. Mit anderen Worten wird das Folienmaterial in einen schmelzfähigen Zustand überführt. Separat vom Erhitzen des Folienmaterials wird der Farbstoff zur Ausbildung einer fließfähigen Farbe erhitzt bzw. aufgeschmolzen. Mit anderen Worten wird der Farbstoff räumlich getrennt von dem Folienmaterial erhitzt. Die Schmelze kann anschließend durch den Düsenaustrittspalt extrudiert bzw. herausgepresst werden. Der Düsenaustrittsspalt stellt hierbei eine formgebende Öffnung dar. Bevorzugt wird die fließfähige Farbe der extrudierten Schmelze zugeführt, insbesondere angrenzend an den Düsenaustrittspalt zugeführt. Durch das Zuführen der fließfähigen Farbe zu der extrudierten Schmelze kann ein wulstartiges Gemisch ausgebildet werden. Innerhalb des wulstartigen Gemisches können sich die fließfähige Farbe und die extrudierte Schmelze vermischen und eine Folie ausbilden. Aufgrund der unterschiedlichen Materialeigenschaften findet keine homogene Vermischung statt. Bevorzugt findet eine inhomogene randomisierte Vermischung statt. Dies bedeutet, dass in Draufsicht auf die ausgebildete Folie eine randomisierte Mehrfarbigkeit erkennbar wird. Insbesondere stellt die randomisierte Mehrfarbigkeit der Folie das Sicherheitsmerkmal dar. Das wulstartige Gemisch kann üblicherweise in einem bestimmten Zeitintervall nach dem Austritt aus dem Düsenaustrittsspalt aufgrund von Abkühlung auskühlen bzw. vollständig erstarren.

Die randomisierte bzw. zufällig verteilte Mehrfarbigkeit kommt insbesondere zustande, weil sich die fließfähige Farbe und die extrudierte Schmelze im wulstartigen Gemisch inhomogen, also zufällig verteilt, vermischen. Dadurch können sich die Grundfarbe und die Farbe des Farbstoffes vermischen und die Mehrfarbigkeit erzeugen. Mit anderen Worten wird eine mehrfarbige Marmorierung der Folie erzielt. Beispielsweise kann vorgesehen sein, dass ein roter Farbstoff und ein Folienmaterial mit einer weißen Grundfarbe bereitgestellt wird. Innerhalb des wulstartigen Gemisches wird dann beispielsweise eine rot-weiße oder gemischte Marmorierung erzeugt. Grundsätzlich kann im Rahmen der Anmeldung jede beliebige Farbe gewählt werden.

Im Rahmen der Anmeldung ist es ebenso denkbar, dass eine Ko-Extrusion für die auszubildende Folie verwendet wird. Beispielsweise kann hierbei ein erstes Folienmaterial und ein zweites Folienmaterial bereitgestellt werden. Das erste Folienmaterial kann in einen Hauptextruder der Extrusionsvorrichtung eingebracht werden. Das zweite Folienmaterial kann in einen Nebenextruder der Extrusionsvorrichtung eingebracht werden. Die Folienmaterialien können zur Ausbildung einer ersten Schmelze und zur Ausbildung einer zweiten Schmelze erhitzt werden. Die erste Schmelze und die zweite Schmelze können dann durch den Düsenaustrittsspalt der Extrusionsvorrichtung ko-extrudiert werden, wodurch insgesamt eine mehrschichtige Folie ausgebildet werden kann, wobei die mehrschichtige Folie ebenso eine randomisierte Mehrfarbigkeit aufgrund der Zuführung der fließfähigen Farbe aufweist.

Generell können bei der Ko-Extrusion mehrere unterschiedliche Materialien durch die gleiche Extrusionsvorrichtung gefördert werden, insbesondere auch drei oder vier oder mehr Materialien. Weiterhin es ist denkbar, dass generell mehrere Materialien für den Hauptextruder und mehrere Materialien für den Nebenextruder bereitgestellt werden.

Die Reihenfolge der Schritte des erfindungsgemäßen Verfahrens ist nicht notwendigerweise auf die beschriebene Reihenfolge beschränkt oder zeitlich festgelegt.

Die Erfindung hat den Vorteil, dass die randomisierte bzw. zufällig verteilte Mehrfarbigkeit ein individuelles Sicherheitsmerkmal für jeden einzelnen kartenförmigen Datenträger darstellt, welches dauerhaft in der Folie integriert werden kann, wodurch die Fälschungssicherheit eines kartenförmigen Datenträgers mit einem derartigen Sicherheitsmerkmal signifikant erhöht wird. Insbesondere können transluzente, opake zufällig verteilte farbige Folien erzeugt werden, welche im Volumen und/oder in der Fläche unterschiedliche Farbtöne aufweisen. Die Mehrfarbigkeit kann von einem Benutzer des kartenförmigen Datenträgers leicht erkannt werden. Die Mehrfarbigkeit hat weiterhin den Vorteil, dass diese durch Erstellen einer Fotokopie des kartenförmigen Datenträgers oder durch Scannen und Drucken nicht einfach reproduzierbar ist, selbst wenn die Kopie oder der Druck von höchster Qualität ist. Folglich kann eine unrechtmäßige Reproduktion des kartenförmigen Datenträgers verhindert werden und die Echtheit des kartenförmigen Datenträgers mittels des Sicherheitsmerkmals garantiert werden. Vorteilhafterweise kann das erfindungsgemäße Verfahren auch mit handelsüblichen Extrusionsvorrichtungen verwendet werden und ist somit leicht umsetzbar.

In einer besonders bevorzugten Ausführungsform kann vorgesehen sein, dass das Verfahren weiterhin folgenden Schritt aufweist:
- Auskühlen der Folie an einer an den Düsenaustrittsspalt angrenzenden Walzenanordnung umfassend wenigstens eine Kühlwalze.

Im Rahmen der Anmeldung kann die Walzenanordnung bevorzugt mehrere Walzen umfassen, welche gekoppelt bzw. nebeneinander angeordnet sein können. Insbesondere können eine oder mehrere Kühlwalzen, Förderwalzen oder Wickelwalzen vorgesehen sein. Die Anzahl der Walzen der Walzenanordnung kann dabei spezifisch an die Folienherstellung, insbesondere an den Auskühlprozess der Folie, angepasst sein. Bevorzugt ist die Walzenanordnung unmittelbar angrenzend bzw. direkt angrenzend an den Düsenaustrittsspalt angeordnet.

Alternativ oder zusätzlich kann vorgesehen sein, dass die Walzenanordnung wenigstens zwei Kühlwalzen umfasst, wobei das wulstartige Gemisch zwischen den Kühlwalzen gefördert wird. Insbesondere sind die Kühlwalzen gegenüberliegend angeordnet, sodass das wulstartige Gemisch nach dem Austritt aus dem Düsenaustrittsspalt zwischen den Kühlwalzen gefördert wird. Insbesondere kann das wulstartige Gemisch in einem Spalt zwischen den Kühlwalzen gefördert werden. Dies sorgt vorteilhafterweise für die Vermischung der fließfähigen Farbe und der extrudierten Schmelze innerhalb des wulstartigen Gemisches. Der Abstand zwischen den Kühlwalzen bzw. die Spaltgröße zwischen den Kühlwalzen kann insbesondere an die Dicke der auszubildenden Folie angepasst sein.

Vorzugsweise kann vorgesehen sein, dass eine Einstellung einer Differenzgeschwindigkeit der Kühlwalzen erfolgt und/oder die Kühlwalzen alternierend mit unterschiedlichen Geschwindigkeiten betrieben werden. Hierdurch kann vorteilhafterweise die Wulstbildung zwischen den Kühlwalzen noch genauer spezifiziert und an die Eigenschaften der herzustellenden Folie angepasst werden. Insbesondere kann auch der Durchsatz eingestellt werden, welche Menge des wulstartigen Gemisches durch die Kühlwalzen gefördert wird. Beispielsweise kann somit auch die Marmorierung der Folie beeinflusst und angepasst werden.

Besonders bevorzugt kann vorgesehen sein, dass das Folienmaterial mit einer transparenten oder opaken Grundfarbe ausgebildet ist. Beispielhaft ist das Folienmaterial als Kunststoffmaterial bzw. als Polymermaterial ausgebildet. Mit anderen Worten stellt das Polymermaterial eine Art Trägermaterial für die Mehrfarbigkeit dar. Es können beispielhaft verschiedene Polymere, wie Polycarbonat (PC), Polymilchsäure (PLA), Polyethylen, Polyester oder Polyethylenterephthalat (PET) verwendet werden. Bevorzugt ist das Polymermaterial aus einem wiederverwendeten Material, z.B. sog. Ocean Plastic, gebildet, das auf Meereskunststoffabfall basiert. Beispielsweise kann vorgesehen sein, dass das Folienmaterial mit einer transparenten Grundfarbe ausgebildet ist und eine fließfähige rote Farbe zugeführt wird. Dies stellt beispielhaft eine einfache Form der Marmorierung dar. Wenn ein Folienmaterial mit einer opaken Grundfarbe, wie beispielsweise einer weißen Grundfarbe, verwendet wird, kann durch die Vermischung mit einer fließfähigen roten Farbe bereits eine komplexere Mehrfarbigkeit und Marmorierung erzielt werden. Die Komplexität der Mehrfarbigkeit und Marmorierung kann je nach Verwendung von der Grundfarbe des Folienmaterials und der Farbstoffe für die fließfähigen Farben eingestellt und angepasst werden.

Alternativ oder zusätzlich kann vorgesehen sein, dass die fließfähige Farbe thermostabil ausgebildet ist und/oder eine hohe Viskosität aufweist. Vorteilhafterweise weist die fließfähige Farbe eine Temperaturstabilität auf. Somit kann sichergestellt werden, dass die Farbe beim Erhitzen bzw. beim Überführen in den fließfähigen Zustand nicht zerstört wird.

Besonders bevorzugt kann vorgesehen sein, dass die fließfähige Farbe durch eine Offsetfarbe oder eine strahlenvernetzende Farbe, insbesondere eine UV-Farbe, gebildet ist. Es sind generell weitere fließfähige Farben denkbar.

Vorzugsweise kann vorgesehen sein, dass das Zuführen der fließfähigen Farbe zu der extrudierten Schmelze mittels einer separaten Düse oder mittels einer Düse der Extrusionsvorrichtung erfolgt. Bei der Ausführungsform der Düse der Extrusionsvorrichtung kann die Düse bevorzugt benachbart bzw. unmittelbar angrenzend zu dem Extruder und dem Düsenaustrittspalt der Extrusionsvorrichtung angeordnet sein. Somit kann sichergestellt werden, dass die fließfähige Farbe und die extrudierte Schmelze schnellstmöglich und damit effektiv zusammengeführt werden können, um das wulstartige Gemisch auszubilden. Die Ausführungsform der separaten Düse hat den Vorteil, dass ein besonders einfaches separates Erhitzen des Farbstoffes zur Ausbildung einer fließfähigen Farbe erzielt werden kann. Es ist jedoch ebenso bevorzugt vorgesehen, dass die separate Düse benachbart bzw. unmittelbar angrenzend zu dem Extruder und dem Düsenaustrittspalt der Extrusionsvorrichtung angeordnet ist.

Bevorzugt kann vorgesehen sein, dass die Düse beheizt wird. Somit kann das Erhitzen des Farbstoffes zur Ausbildung einer fließfähigen Farbe besonders einfach realisiert werden.

Vorteilhafterweise kann vorgesehen sein, dass die Düse wenigstens eine Kammer für die fließfähige Farbe aufweist. Die Kammer stellt insbesondere eine Aufnahmeeinheit für die Bereitstellung des Farbstoffs dar. Mit anderen Worten kann der Farbstoff in die Kammer der Düse eingebracht bzw. eingefüllt werden. Anschließend kann der Farbstoff innerhalb der Kammer der Düse erhitzt werden, damit eine fließfähige Farbe ausgebildet werden kann. Hierzu kann beispielhaft die Düse selbst beheizt sein oder es kann eine externe Wärmezufuhr erfolgen. Die fließfähige Farbe kann anschließend per Druck aus der Kammer durch eine schmale Öffnung der Düse herausgepresst werden und der extrudierten Schmelze zugeführt werden. Somit kann bevorzugt eine Dosierung der fließfähigen Farbe erfolgen.

Insbesondere kann vorgesehen sein, dass die Düse mehrere Kammern, insbesondere ein Mehrkammernsystem, aufweist, wobei je Kammer eine unterschiedliche fließfähige Farbe vorgesehen wird. Mittels der mehreren Kammern kann bereits durch die Verwendung von mehreren Farbstoffen eine komplexe auszubildende Mehrfarbigkeit bereitgestellt werden. Die unterschiedlichen Farbstoffe können mittels der mehreren Kammern besonders leicht unterteilt und dennoch gleichzeitig erhitzt werden, um die unterschiedlichen fließfähigen Farben bereitzustellen. Es kann somit eine effiziente Dosierung und Zuführung der unterschiedlichen fließfähigen Farben erfolgen. Beispielsweise können drei Kammern in der Düse vorgesehen werden, wobei in die erste Kammer ein roter Farbstoff, in die zweite Kammer ein grüner Farbstoff und in die dritte Kammer ein blauer Farbstoff eingebracht bzw. eingefüllt wird. Aufgrund der Erhitzung der Düse kann der jeweilige Farbstoff in der Kammer gleichzeitig erhitzt werden und es kann eine rote, grüne und blaue fließfähige Farbe in den jeweiligen Kammern erzeugt werden. Die fließfähigen Farben können dann anschließend durch eine jeweilige schmale Öffnung der Düse herausgepresst und der extrudierten Schmelze zugeführt werden. Mit anderen Worten ist pro Kammer eine zugeordnete schmale Öffnung vorgesehen, wobei die jeweilige fließfähige Farbe aus der Düse austreten kann.

Besonders bevorzugt kann vorgesehen sein, dass die Kammern nacheinander gelagert innerhalb der Düse angeordnet sind, wodurch eine streifenförmige Zuführung der unterschiedlichen fließfähigen Farben realisierbar ist. Mit anderen Worten sind die Kammern innerhalb der Düse bevorzugt benachbart zueinander angeordnet bzw. nebeneinander angeordnet. Somit können die fließfähigen Farben streifenförmig aus der Düse austreten. Dies ermöglicht eine besonders einfache und gezielte Zuführung der fließfähigen Farben zu der extrudierten Schmelze.

Vorteilhaftweise kann vorgesehen sein, dass die unterschiedlichen fließfähigen Farben jeweils unterschiedliche Materialeigenschaften aufweisen. Dies verhindert eine homogene Vermischung der Farben zu einem braunschwarzen Gemisch. Insbesondere kann aufgrund der unterschiedlichen Materialeigenschaften die gewünschte inhomogene Vermischung und damit die randomisierte Mehrfarbigkeit erzielt werden. Beispielsweise können sich die unterschiedlichen fließfähigen Farben hinsichtlich der Parameter Schmelztemperatur und/oder Schmelzviskosität unterscheiden. Bevorzugt werden Farben mit einer hohen Schmelzviskosität verwendet.

Gemäß einem zweiten Aspekt der Erfindung wird eine Folie mit einem Sicherheitsmerkmal für einen kartenförmigen Datenträger bereitgestellt, welche durch das Verfahren nach einem der vorhergehenden Ausführungsformen hergestellt ist. Es gelten die gleichen Vorteile und Modifikationen wie zuvor beschrieben.

Besonders bevorzugt kann vorgesehen sein, dass die Folie eine Dicke von 25 - 100 µm, vorzugsweise von 50 - 100 µm aufweist. Beispielsweise kann die Folie mit dem Sicherheitsmerkmal in einen Folienschichtverbund laminiert oder geklebt werden. Besonders bevorzugt kann die hergestellte Folie mit einem Sicherheitsmerkmal als Overlay-Folie für einen kartenförmigen Datenträger verwendet werden.

Gemäß einem dritten Aspekt der Erfindung wird ein kartenförmiger Datenträger, insbesondere eine Smart Card, bereitgestellt, aufweisend einen Kartenkörper, an welchem eine Folie mit einem Sicherheitsmerkmal nach einem der vorhergehenden Ausführungsformen angeordnet ist. Es gelten die gleichen Vorteile und Modifikationen wie zuvor beschrieben.

Die vorliegende Erfindung wird nachfolgend mit Bezug auf die beiliegenden Figuren beispielhaft im Rahmen von Ausführungsformen beschrieben. Selbstverständlich können einzelne Merkmale der Ausführungsformen, sofern technisch sinnvoll, frei miteinander kombiniert werden, ohne den Rahmen der vorliegenden Erfindung zu verlassen. Elemente mit gleicher Funktion und Wirkungsweise sind in den Figuren mit denselben Bezugszeichen versehen. Die Figuren zeigen nachfolgend schematisch:
- Fig. 1:: ein Verfahren zur Herstellung einer Folie mit einem Sicherheitsmerkmal für einen kartenförmigen Datenträger nach einem erfindungsgemäßen Ausführungsbeispiel, und
- Fig. 2:: einen kartenförmigen Datenträger nach einem erfindungsgemäßen Ausführungsbeispiel, welcher nach dem Verfahren von Figur 1 hergestellt ist.

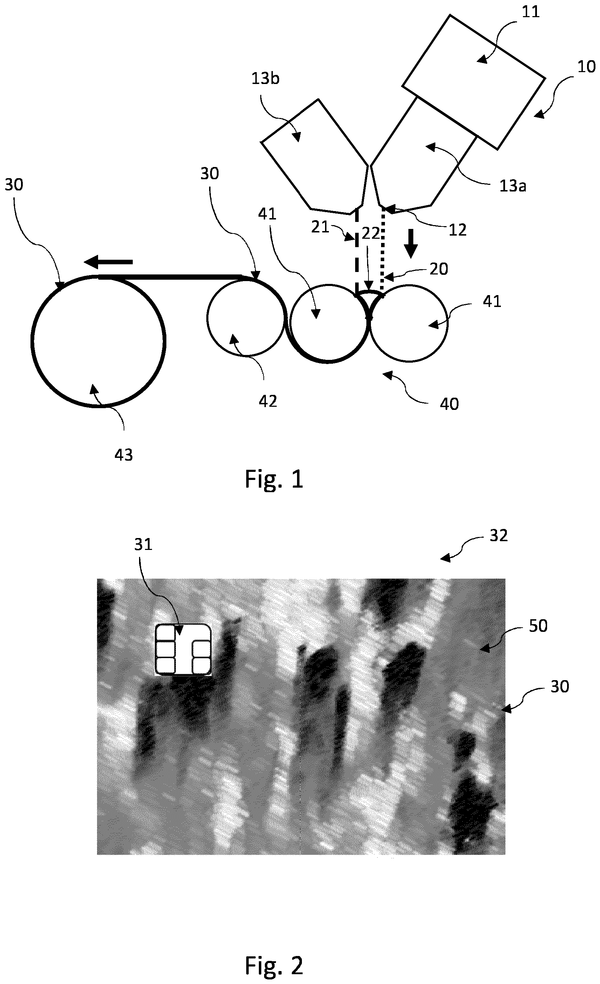

Figur 1 zeigt ein Verfahren zur Herstellung einer Folie 30 mit einem Sicherheitsmerkmal für einen kartenförmigen Datenträger nach einem erfindungsgemäßen Ausführungsbeispiel.

Für die Herstellung der Folie ist eine Extrusionsvorrichtung 10 vorgesehen. Die Extrusionsvorrichtung 10 weist beispielhaft einen Extruder 11, eine erste Düse 13a, eine zweite Düse 13b und einen Düsenaustrittsspalt 12 auf. Zunächst wird ein nicht dargestelltes Folienmaterial mit einer weißen Grundfarbe bereitgestellt. Bei dem Folienmaterial kann es sich beispielhaft um ein Kunststoffgranulat handeln. Das Folienmaterial wird in den Extruder 11 eingebracht bzw. eingefüllt.

Das Folienmaterial wird anschließend zur Ausbildung einer Schmelze 20 erhitzt bzw. aufgeschmolzen. Beispielhaft wird das Folienmaterial im Extruder 11 erhitzt und über die erste Düse 13a bzw. den Düsenaustrittspalt 12 extrudiert bzw. herausgepresst. Die extrudierte Schmelze 20 wird in der Figur illustrativ durch die gestrichelte Linie als Massenstrom dargestellt. Die extrudierte Schmelze 20 wird anschließend an den Düsenaustrittspalt 12 beispielhaft entlang der Pfeilrichtung gefördert.

Ferner wird ein nicht dargestellter Farbstoff mit roter Farbe bereitgestellt. Der Farbstoff kann beispielhaft pulverförmig ausgebildet sein. Es ist insbesondere vorgesehen, dass der Farbstoff separat erhitzt wird, um eine rote fließfähige Farbe 21 auszubilden. Hierfür ist die zweite Düse 13b vorgesehen, wobei der Farbstoff in die zweite Düse 13b eingebracht bzw. eingefüllt werden kann. Hierzu weist die zweite Düse 13b beispielhaft eine nicht dargestellte Kammer auf. Die Kammer stellt insbesondere eine Aufnahmeeinheit für die Bereitstellung des Farbstoffs dar. Mit anderen Worten kann der Farbstoff in die Kammer der Düse 13b eingebracht bzw. eingefüllt werden. Anschließend kann der Farbstoff innerhalb der Kammer der Düse 13b erhitzt werden, damit eine fließfähige Farbe 21 ausgebildet werden kann. Dazu ist die zweite Düse 13b beheizt, um die nötige Wärmezufuhr bereitzustellen. Die fließfähige Farbe 21 kann anschließend per Druck aus der Kammer durch eine schmale Öffnung der Düse 13b herausgepresst werden, um anschließend der extrudierten Schmelze 20 zugeführt zu werden. Beispielhaft sind die erste Düse 13a und die zweite Düse 13b benachbart bzw. unmittelbar angrenzend aneinander angeordnet. Die fließfähige Farbe 21, welche aus der zweiten Düse 13b austritt, wird in der Figur illustrativ durch die weitere gestrichelte Linie als Massenstrom dargestellt. Beispielhaft ist hier vorgesehen, dass die fließfähige Farbe 21 und die extrudierte Schmelze 20 nach dem Austritt aus den Düsen 13 a,b parallel zueinander in Pfeilrichtung gefördert werden.

Ferner ist vorgesehen, dass die fließfähige Farbe 21 zu der extrudierten Schmelze 20 zur Ausbildung eines wulstartigen Gemisches 22 zugeführt wird. Hierzu ist beispielhaft eine Walzenanordnung 40 vorgesehen, welche mehrere, insbesondere vier, Walzen 41, 42, 43 umfasst, welche gekoppelt bzw. nebeneinander angeordnet sind. Es sind beispielhaft zwei Kühlwalzen 41, eine Wickelwalze 43 und eine Förderwalze 42 vorgesehen. Die Anzahl der Walzen 41, 42, 43 der Walzenanordnung 40 kann dabei spezifisch an die Folienherstellung, insbesondere an den Auskühlprozess der extrudierten Schmelze 20, angepasst sein.

Die beiden Kühlwalzen 41 sind unmittelbar angrenzend zueinander angeordnet. Es ist eine rechtsseitig gelegene und eine linksseitig gelegene Kühlwalze 41 vorgesehen. Weiterhin sind die beiden Kühlwalzen 41 angrenzend an die Düsen 13 a,b bzw. an den Düsenaustrittspalt 12 angeordnet. Beispielhaft trifft somit die extrudierte Schmelze 20 auf die rechte Kühlwalze 41 auf. Die fließfähige Farbe 21 trifft auf die linke Kühlwalze 41 auf. Die Kühlwalzen 41 sind rotierend gelagert und somit kann durch den Rotationsprozess die fließfähige Farbe 21 der extrudierten Schmelze 20 zugeführt werden. Beim Aufeinandertreffen der fließfähigen Farbe 21 auf die extrudierte Schmelze 20 bildet sich das wulstartige Gemisch 22 aus. Das wulstartige Gemisch 22 wird illustrativ zwischen den beiden Kühlwalzen 41 ausgebildet. Innerhalb des wulstartigen Gemisches 22 findet ein Vermischen der fließfähigen Farbe 21 und der extrudierten Schmelze 20 statt.

Es ist vorgesehen, dass die extrudierte Schmelze 20 und die fließfähige Farbe 21 unterschiedliche Materialeigenschaften aufweisen, sodass sie sich nicht homogen vermischen. Anders gesagt findet eine inhomogene Vermischung der extrudierten Schmelze 20 und der fließfähigen Farbe 21 statt. Die inhomogene Vermischung kann beispielsweise noch verstärkt werden, wenn die Kühlwalzen 41 mit unterschiedlichen Geschwindigkeiten rotiert werden. Wie im Beispiel beschrieben, vermischen sich die weiße Grundfarbe der extrudierten Schmelze 20 und die rote Farbe der fließfähigen Farbe 21. Das wulstartige Gemisch 22 weist somit eine randomisierte Mehrfarbigkeit aus den Farben rot und weiß sowie deren Mischfarben auf.

An den Kühlwalzen 41 kann das wulstartige Gemisch 22 mit der randomisierten Mehrfarbigkeit nicht nur gefördert werden, sondern auch auskühlen und erstarren und somit eine Folie 30 mit der randomisierten Mehrfarbigkeit ausbilden. Die Folie 30 wird in der Figur illustrativ durch die durchgezogene schwarze Linie dargestellt. Anschließend an die Kühlwalzen 41 kann die ausgebildete Folie 30 über die Förderwalze 42 zu der Wickelwalze 43 in Pfeilrichtung gefördert werden und an der Wickelwalze 43 aufgewickelt werden.

Insbesondere in Draufsicht auf die Folie 30 ist für den Benutzer die randomisierte Mehrfarbigkeit erkennbar. Die randomisierte Mehrfarbigkeit stellt ein Sicherheitsmerkmal für die Folie 30 dar und erhöht damit die Fälschungssicherheit.

Beispielhaft ist die randomisierte Mehrfarbigkeit 50 in Figur 2 dargestellt. Figur 2 zeigt einen kartenförmigen Datenträger 32, insbesondere eine Smart Card, aufweisend einen Kartenkörper, an welchem die Folie 30 mit der randomisierten Mehrfarbigkeit 50 als Sicherheitsmerkmal angeordnet ist. Beispielhaft ist die Folie 30 an der Oberfläche des Kartenkörpers vorgesehen. Der Kartenkörper kann beliebig viele weitere Folien umfassen, welche beispielhaft zu einem Folienschichtverbund laminiert sein können. Weiterhin weist der Kartenkörper ein Chipmodul 31 auf, wodurch eine kontaktbasierte Datenkommunikation bereitgestellt werden kann. Das Chipmodul 31 ist in einer Modulöffnung angeordnet und aufgenommen. Es können beliebig viele weitere elektronische Komponenten, beispielsweise für eine kontaktlose Datenkommunikation vorgesehen werden.

Die randomisierte Mehrfarbigkeit 50 der Folie 30 weist mehrere zufällig verteilte Farbflächenbereiche auf. Insbesondere können weiße Farbflächenbereiche, rote Farbflächenbereiche (welche illustrativ schwarz dargestellt sind) und Mischfarbenbereiche, wie beispielsweise rosa Bereiche, (welche illustrativ grau dargestellt sind) erzeugt sein. Die Farbflächenbereiche haben zufällige Größen und zufällige Randkonturen. Sie können an ihren Flächenbereichsgrenzen in der Wahrnehmung für einen Benutzer fließend ineinander übergehen oder die Flächenbereichsgrenzen sind nahezu scharf. Dem Benutzer des kartenförmigen Datenträgers 32 ergibt sich eine zufällig verteilte Abfolge von Farbflächenbereichen. Mit anderen Worten kann der Benutzer eine mehrfarbige Marmorierung der Folie 30 des kartenförmigen Datenträgers 32 wahrnehmen. Dadurch weist der kartenförmige Datenträger 32 ein eindeutiges optisches Sicherheitsmerkmal auf, welches optisch erfasst und ausgewertet werden kann.

### Bezugszeichenliste

- 10: Extrusionsvorrichtung
- 11: Extruder
- 12: Düsenaustrittspalt
- 13a: erste Düse
- 13b: zweite Düse
- 20: Schmelze
- 21: fließfähige Farbe
- 22: wulstartiges Gemisch
- 30: Folie
- 31: Chipmodul
- 32: kartenförmiger Datenträger
- 40: Walzenanordnung
- 41: Kühlwalze
- 42: Förderwalze
- 43: Wickelwalze
- 50: randomisierte Mehrfarbigkeit

## Patentansprüche

1. Verfahren zum Herstellen einer Folie (30) mit einem Sicherheitsmerkmal für einen kartenförmigen Datenträger (32), welches die folgenden Schritte aufweist:
- Bereitstellen von wenigstens einem Folienmaterial mit einer Grundfarbe;
- Bereitstellen von wenigstens einem Farbstoff;
- Einbringen des Folienmaterials in einen Extruder (11) einer Extrusionsvorrichtung (10);
- Erhitzen des Folienmaterials zur Ausbildung einer Schmelze (20);
- separates Erhitzen des Farbstoffes zur Ausbildung einer fließfähigen Farbe (21);
- Extrudieren der Schmelze (20) durch einen Düsenaustrittsspalt (12) der Extrusionsvorrichtung (10);
- Zuführen der fließfähigen Farbe (21) zu der extrudierten Schmelze (20) zur Ausbildung eines wulstartigen Gemisches (22);
- Vermischen der fließfähigen Farbe (21) und der extrudierten Schmelze (20) innerhalb des wulstartigen Gemisches (22) zur Ausbildung einer Folie (30), wobei die extrudierte Schmelze (20) und die fließfähige Farbe (21) unterschiedliche Materialeigenschaften aufweisen, sodass sie sich nicht homogen vermischen, wodurch in Draufsicht auf die Folie (30) eine randomisierte Mehrfarbigkeit (50) erkennbar ist.

2. Verfahren nach Anspruch 1, **dadurch gekennzeichnet, dass** das Verfahren weiterhin folgenden Schritt aufweist:
- Auskühlen der Folie (30) an einer an den Düsenaustrittsspalt (12) angrenzenden Walzenanordnung (40) umfassend wenigstens eine Kühlwalze (41).

3. Verfahren nach Anspruch 2, **dadurch gekennzeichnet, dass** die Walzenanordnung (40) wenigstens zwei Kühlwalzen (41) umfasst, wobei das wulstartige Gemisch (22) zwischen den Kühlwalzen (41) gefördert wird.

4. Verfahren nach Anspruch 3, **dadurch gekennzeichnet, dass** eine Einstellung einer Differenzgeschwindigkeit der Kühlwalzen (41) erfolgt und/oder die Kühlwalzen (41) alternierend mit unterschiedlichen Geschwindigkeiten betrieben werden.

5. Verfahren nach einem der vorhergehenden Ansprüche, **dadurch gekennzeichnet, dass** das Folienmaterial mit einer transparenten oder opaken Grundfarbe ausgebildet ist.

6. Verfahren nach einem der vorhergehenden Ansprüche, **dadurch gekennzeichnet, dass** die fließfähige Farbe (21) thermostabil ausgebildet ist und/oder eine hohe Viskosität aufweist.

7. Verfahren nach einem der vorhergehenden Ansprüche, **dadurch gekennzeichnet, dass** die fließfähige Farbe (21) durch eine Offsetfarbe oder eine strahlenvernetzende Farbe, insbesondere eine UV-Farbe, gebildet ist.

8. Verfahren nach einem der vorhergehenden Ansprüche, **dadurch gekennzeichnet, dass** das Zuführen der fließfähigen Farbe (21) zu der extrudierten Schmelze (20) mittels einer separaten Düse (13) oder mittels einer Düse (13) der Extrusionsvorrichtung (10) erfolgt.

9. Verfahren nach Anspruch 8, **dadurch gekennzeichnet, dass** die Düse (13) beheizt wird.

10. Verfahren nach Anspruch 8 oder 9, **dadurch gekennzeichnet, dass** die Düse (13) wenigstens eine Kammer für die fließfähige Farbe (21) aufweist.

11. Verfahren nach Anspruch 10, **dadurch gekennzeichnet, dass** die Düse (13) mehrere Kammern, insbesondere ein Mehrkammernsystem, aufweist, wobei je Kammer eine unterschiedliche fließfähige Farbe (21) vorgesehen wird.

12. Verfahren nach Anspruch 11, **dadurch gekennzeichnet, dass** die Kammern nacheinander gelagert innerhalb der Düse (13) angeordnet sind, wodurch eine streifenförmige Zuführung der unterschiedlichen fließfähigen Farben (21) realisierbar ist.

13. Verfahren nach Anspruch 11 oder 12, **dadurch gekennzeichnet, dass** die unterschiedlichen fließfähigen Farben (21) jeweils unterschiedliche Materialeigenschaften aufweisen.

14. Folie (30) mit einem Sicherheitsmerkmal für einen kartenförmigen Datenträger (32), welche durch das Verfahren nach einem der Ansprüche 1 bis 13 hergestellt ist.

15. Folie (30) nach Anspruch 14, **dadurch gekennzeichnet, dass** die Folie (30) eine Dicke von 25 - 100 µm, vorzugsweise von 50 - 100 µm aufweist.

16. Kartenförmiger Datenträger (32), insbesondere eine Smart Card, aufweisend einen Kartenkörper, an welchem eine Folie (30) mit einem Sicherheitsmerkmal nach einem der Ansprüche 14 oder 15 angeordnet ist.
